# EUROPÄISCHE PATENTSCHRIFT

(11) **EP 4 061 759 B1**
(45) Veröffentlichungstag und Bekanntmachung des Hinweises auf die Patenterteilung: **01.01.2025**
(21) Anmeldenummer: 20801288.0
(22) Anmeldetag: 10.11.2020
(51) Int. Cl.: B66B 25/00, G01P 3/44

(54) **GESCHWINDIGKEITSÜBERWACHUNGSEINRICHTUNG EINER PERSONENTRANSPORTANLAGE**
DEVICE FOR MONITORING THE SPEED OF A PASSENGER TRANSPORT SYSTEM
DISPOSITIF DE SURVEILLANCE DE LA VITESSE D'UNE INSTALLATION DE TRANSPORT DES PERSONNES

(30) Priorität: 18.11.2019 EP 19209772
(43) Veröffentlichungstag der Anmeldung: 28.09.2022
(73) Patentinhaber: INVENTIO AG, 6052 Hergiswil (CH)
(72) Erfinder: BERGER, Michael, 3433 Königstetten (AT); BLONDIAU, Dirk Mark, 1170 Wien (AT); STOIBER, Gerhard, 2225 Zistersdorf (AT)
(74) Vertreter: Inventio AG
(86) Internationale Anmeldenummer: PCT/EP2020/081669
(87) Internationale Veröffentlichungsnummer: WO 2021/099187

(56) Entgegenhaltungen:
- CN-A- 108 226 559
- CN-U- 202 075 295
- CN-Y- 201 237 602
- JP-A- 2007 217 090
- FEI TAO ET AL: "Digital twin-driven product design, manufacturing and service with big data", THE INTERNATIONAL JOURNAL OF ADVANCED MANUFACTURING TECHNOLOGY, vol. 94, no. 9-12, 16 March 2017 (2017-03-16), London, pages 3563 - 3576, XP055547858, ISSN: 0268-3768, DOI: 10.1007/s00170-017-0233-1

## Beschreibung

Die Erfindung betrifft eine Geschwindigkeitsüberwachungseinrichtung zum Messen einer Drehzahl beziehungsweise einer Drehgeschwindigkeit einer Hauptantriebswelle einer Personentransportanlage, sowie eine Personentransportanlage mit einer solchen Geschwindigkeitsüberwachungseinrichtung.

Solche, als Fahrtreppen oder Fahrsteige ausgestalteten Personentransportanlagen weisen eine Hauptantriebswelle mit mindestens einem Antriebskettenrad zum Antreiben und Umlenken eines Transportbandes auf. Diese sind weit verbreitet und können beispielsweise in Bauwerken des öffentlichen Verkehrs wie Bahnhöfen, Flughäfen, U-Bahnstationen und dergleichen mehr eingesetzt werden. Des Weiteren sind viele dieser Anlagen auch in Kaufhäusern, Shoppingmalls, Freizeitparks usw. zu finden. Je nach Einsatzgebiet und Einsatzort unterliegen diese Personentransportanlagen unterschiedlichen Anforderungen, die einerseits durch Normenwerke, wie beispielsweise die EN 115-1, andererseits aber auch durch die kundenspezifischen Anforderungen, wie beispielsweise die Förderleistung und Förderhöhe, vorgegeben werden.

Da mittels Fahrtreppen und Fahrsteigen Personen transportiert werden, unterstehen sie besonderen Sicherheitsbestimmungen und müssen sehr sicher gebaut und konstruiert sein. Eine Möglichkeit, die Sicherheit zu erhöhen kann beispielsweise darin bestehen, Sicherheitsfaktoren bezüglich der Festigkeit von sicherheitsrelevanten Bauteilen vorzuschreiben. Eine weitere Möglichkeit besteht darin, in der Fahrtreppe oder im Fahrsteig Sensoren vorzusehen, welche bestimmte Betriebsparameter messen können. Deren Messsignale werden an die Steuerung der Fahrtreppe oder des Fahrsteiges übermittelt und dort hinsichtlich möglicher Gefahren ausgewertet. Um die Bewegungen des als Stufenband oder Palettenband ausgebildeten Transportbandes einer Personentransportanlage zu überwachen, können dessen Bewegungen mittels einer Geschwindigkeitsüberwachungseinrichtung erfasst und die erfassten Messsignale an die Steuerung übertragen werden.

Das Transportband ist in der Personentransportanlage umlaufend angeordnet und wird zwischen zwei Umlenkbereichen von einer Vorlaufrichtung in eine Rücklaufrichtung umgelenkt. So besteht nun die Möglichkeit, beispielsweise mittels eines Sensors die vorbeifahrenden Stufen oder Paletten zu erfassen und deren Geschwindigkeit zu messen. Eine andere Möglichkeit besteht darin, die Hauptantriebswelle mittels Sensoren zu überwachen. Eine solche Geschwindigkeitsüberwachungseinrichtung wird beispielsweise in der EP 3 530 606 A1 offenbart. Diese Geschwindigkeitsüberwachungseinrichtung weist eine Abgriffseinrichtung auf, die auf der Wellenmantelfläche der Hauptantriebswelle befestigt werden kann. Des Weiteren ist ein Drehzahlsensor vorhanden, welcher an seiner Eingangswelle ein Reibrad aufweist. Wenn die Hauptantriebswelle dreht, dreht sie die Abgriffseinrichtung mit und die Bewegung der Abgriffseinrichtung wird über das Reibrad an den Drehzahlsensor übertragen.

Die Geschwindigkeitsüberwachungseinrichtung der vorgenannten Art weist den Nachteil auf, dass die mittels des Reibrades abgegriffenen Bewegungen fehlerbehaftet übertragen werden können. Beispielsweise kann durch Öl oder andere Schmierstoffe der Reibungskoeffizient zwischen dem Reibrad und der Abgriffseinrichtung so heruntergesetzt werden, dass sehr rasche Bewegungen und Geschwindigkeitsänderungen der Hauptantriebswelle nicht präzise genug auf das Reibrad übertragen werden. Ein anderes Problem besteht auch darin, dass während des Betriebes Schmutzablagerungen auf den Oberflächen anhaften und dort durch die beiden drehenden Reibungspartner auf deren Oberflächen festgewalzt werden. Solche festgewalzten Schmutzablagerungen führen zu einer Durchmesserveränderung der Abgriffseinrichtung und/oder zu einer Durchmesserveränderung des Reibrades. Dadurch kann sich das Übersetzungsverhältnis zwischen diesen beiden Teilen ändern, so dass eine eigentlich nicht vorhandene Geschwindigkeitsveränderung detektiert wird, deren Auswertung gegebenenfalls ein Alarmsignal auslösen kann.

Eine weitere mögliche Anordnung einer Geschwindigkeitsüberwachungseinrichtung offenbart die JP 2007 217090 A, bei welcher ein Encoder mit einer Welle eines Reduktionsgetriebes gekoppelt ist. Die CN108226559A zeigt ebenfalls eine Geschwindigkeitsüberwachungseinrichtung der vorgenannten Art.

Die Aufgabe der vorliegenden Erfindung ist daher, eine Geschwindigkeitsüberwachungseinrichtung anzugeben, die die vorangehend beschriebenen Nachteile überwindet.

Diese Aufgabe wird durch eine Geschwindigkeitsüberwachungseinrichtung gemäß Anspruch 1 gelöst. Diese Geschwindigkeitsüberwachungseinrichtung weist mindestens einen Drehzahlsensor mit einer Eingangswelle auf. Des Weiteren umfasst die Geschwindigkeitsüberwachungseinrichtung eine Abgriffseinrichtung, die so konfiguriert ist, dass sie auf einer Wellenmantelfläche einer Hauptantriebswelle einer Personentransportanlage, deren Drehzahl gemessen werden soll, angeordnet werden kann. Zudem umfasst die Geschwindigkeitsüberwachungseinrichtung eine Halterung zur Befestigung des Drehzahlsensors in einer ortsfesten Position relativ zu einer Drehachse der Abgriffseinrichtung auf. Ferner weist die Geschwindigkeitsüberwachungseinrichtung ein Ritzel auf, welches mit der Eingangswelle des Drehzahlsensors mechanisch verbunden ist, so dass eine Drehung des Ritzels auf die Eingangswelle übertragen werden kann. Damit die Drehbewegung der Abgriffseinrichtung präzise übertragen werden kann, weist die Abgriffseinrichtung eine Verzahnung auf, die mit dem Ritzel formschlüssig drehübertragend, koppelbar ist. Um die Eingangswelle des Drehzahlsensors von unerwünschten Einwirkungen zu schützen, ist das Ritzel in der Halterung in zwei Lagerstellen drehbar gelagert. In der vorliegenden Schrift ist unter dem Merkmal «Ritzel» ein Rad mit einer Verzahnung zu verstehen, insbesondere ein Zahnrad oder ein Kettenrad. Drehzahlsensoren wie beispielsweise Drehgeber, Drehwinkelgeber, Encoder, usw. sind hochpräzise und damit auch recht empfindliche Sensoren. Insbesondere weist der Drehzahlsensor eine Lagerung der Eingangswelle auf, die gegen Schläge und übermässige Kräfte empfindlich ist. Solche Kräfte können beispielsweise durch Fremdkörper, die zwischen die Verzahnung des Ritzels und der Abgriffseinrichtung hineingeraten, verursacht werden. Aufgrund der Zahngeometrie entstehen zudem radiale Kräfte auf das Ritzel, die bei einer direkten Anordnung des Ritzels auf der Eingangswelle zu einer schwellenden Belastung der Lagerung der Eingangswelle führen, und deren Lebensdauer signifikant reduzieren würde. Mit anderen Worten stellt die beidseitige Lagerung des Ritzels in Lagerstellen somit sicher, dass ausser der Drehbewegung faktisch keine weiteren Kräfte und Momente auf die Eingangswelle des Drehzahlsensor einwirken. Das heisst, durch die Lagerung des Ritzels in zwei Lagerstellen kann die Eingangswelle von Schlägen und übermässigen Kräften, insbesondere auch von Biegemomenten, gänzlich entkoppelt werden. Hierdurch kann die Lebensdauer des Drehzahlsensors und damit auch die Zuverlässigkeit des Systems erhöht werden.

Erfindungsgemäss ist die Abgriffseinrichtung dazu ausgestaltet, an einer Seitenflanke eines Wellenabsatzes der Hauptantriebswelle befestigt zu werden. Hierdurch wird eine einfache und sichere Befestigung der Abgriffseinrichtung ermöglicht und vermieden, dass sich die Abgriffseinrichtung relativ zur Hauptantriebswelle verschieben kann. Ein solcher Wellenabsatz kann beispielsweise ein auf der Hauptantriebswelle ausgebildetes oder an dieser befestigtes Handlaufantriebskettenrad sein, über das ein Handlaufantrieb der Personentransportanlage angetrieben werden kann. Zur Befestigung können beispielsweise Schrauben verwendet werden, welche parallel zur Drehachse der Hauptantriebswelle, sowie das Handlaufantriebskettenrad und Ringhälften des geteilten Adapters durchdringend, angeordnet sind.

In einer Ausführung der Erfindung erfolgt die drehübertragende Kopplung durch einen direkten Eingriff des Ritzels in die Verzahnung der Abgriffseinrichtung. Mit anderen Worten greift die Verzahnung des Ritzels direkt in die Verzahnung der Abgriffseinrichtung ein. Da das Ritzel in zwei Lagerstellen drehbar gelagert ist, werden die durch den direkten Eingriff des Ritzels in die Verzahnung der Abgriffseinrichtung entstehenden Flankenkräfte hervorragend in den Lagerstellen abgestützt. Somit übertragen sich auch diese Kräfte nicht auf die Eingangswelle des Drehzahlsensors.

In einer weiteren Ausführung erfolgt die drehübertragende Kopplung zwischen dem Ritzel und der Verzahnung über ein formschlüssiges Übertragungselement wie beispielsweise eine Kette, einen Zahnriemen oder ein Zwischenzahnrad. Das formschlüssige Übertragungselement ist hierbei auf die Verzahnungen des Ritzels und der Abgriffseinrichtung abgestimmt und logischerweise durch seine Ausgestaltung in der Lage, die Drehbewegung der Abgriffseinrichtung auf das Ritzel zu übertragen. Durch diese Anordnung kann das Ritzel und der damit drehübertragend verbundene Drehzahlsensor weiter von der Hauptantriebswelle beabstandet angeordnet werden. Eine solche Anordnung ist dann erforderlich, wenn die Raumverhältnisse zwischen dem Transportband einen direkten Eingriff des Ritzels in die Verzahnung der Abgriffseinrichtung nicht erlauben. Durch die beiden Lagerstellen werden die auf das Ritzel wirkenden Zugkräfte der Kette oder des Zahnriemens auf die Halterung übertragen und wirken nicht auf die Eingangswelle des Drehzahlsensors.

In einer weiteren Ausgestaltung der Erfindung kann zwischen dem Ritzel und der Eingangswelle eine verdrehsteife, flexible Kupplung vorgesehen sein. Diese kann Winkelfehler und Versatz zwischen der Mittellängsachse der Eingangswelle und der Mittellängsachse des Ritzels ausgleichen. Vorzugsweise ist diese verdrehsteife flexible Kupplung aus Metall gefertigt. Mögliche Kupplungstypen sind hierbei Klauenkupplungen, Zahnkupplungen, Metallbalgkupplungen, Federstegkupplungen und dergleichen mehr.

Gemäß der Erfindung umfasst die Abgriffseinrichtung der Geschwindigkeitsüberwachungseinrichtung einen ringförmigen, geteilten Adapter wobei die Verzahnung auf einer Innenfläche der Abgriffseinrichtung angeordnet ist. Da die Abgriffseinrichtung unterhalb des Vorlaufes des umlaufenden Transportbandes angeordnet ist, ist sie herabfallendem Schmutz ausgesetzt. Durch die Innenverzahnung kann eine hohe Schutzwirkung gegen die Ansammlung dieses Schmutzes in der Verzahnung erreicht werden.

Damit das Ritzel präzise zur Abgriffseinrichtung positioniert werden kann, ist die Halterung vorzugsweise zumindest zweiteilig ausgeführt, wobei diese einen ersten Halterungsteil und einen zweiten Halterungsteil umfasst. Am ersten Halterungsteil können die beiden Lagerstellen ausgebildet sein, in welchen das Ritzel drehbar gelagert ist. Ferner kann am ersten Halterungsteil auch der Drehzahlsensor angeordnet sein. Am zweiten Halterungsteil kann beispielsweise ein Befestigungsbereich ausgebildet sein, der zur Befestigung der Halterung an einen feststehenden Strukturteil der Personentransportanlage vorgesehen ist. Das erste Halterungsteil und das zweite Halterungsteil sind über eine Verbindungsstelle einstellbar miteinander verbunden.

Des Weiteren kann die Geschwindigkeitsüberwachungseinrichtung ein Schutzgehäuse umfassen, welches an der Halterung befestigt werden kann. Hierbei kann das Schutzgehäuse das Ritzel und den Drehzahlsensor überspannen. Dadurch wirkt das Schutzgehäuse einer Haube gleich gegen herabfallenden Schmutz. In einer weiteren Ausführung kann das Schutzgehäuse auch das Ritzel, den Drehzahlsensor und die Abgriffseinrichtung überspannen. Dieses haubenförmig ausgebildete Schutzgehäuse schützt damit auch den Eingriff zwischen dem Ritzel und der Abgriffseinrichtung und beugt so einer Beschädigung der Verzahnung von Ritzel und Abgriffseinrichtung durch herabfallende, harte Gegenstände vor. Das Schutzgehäuse kann in einer weiteren Ausführung auch das Ritzel, den Drehzahlsensor und die Abgriffseinrichtung umschliessen. Vorzugsweise ist hierbei das Schutzgehäuse zweiteilig ausgeführt, damit es auch dann montiert beziehungsweise demontiert werden kann, wenn die Hauptantriebswelle in der Personentransportanlage eingebaut ist. Das letztgenannte Schutzgehäuse schützt somit die gesamte Geschwindigkeitsüberwachungseinrichtung nach allen Seiten hin, so dass eine optimale Abgrenzung gegen Umgebungseinflüsse möglich ist. Gegebenenfalls kann im Schutzgehäuse auch eine Heizung integriert sein, um die Bildung von Kondenswasser innerhalb des Schutzgehäuses zu verhindern.

Um die Geschwindigkeitsüberwachungseinrichtung in einer Personentransportanlage, die als Fahrtreppe oder Fahrsteig ausgestaltet ist, zu montieren, kann deren Abgriffseinrichtung an einer Wellenmantelfläche einer Hauptantriebswelle der Personentransportanlage befestigt werden. Eine weitere Baugruppe der Geschwindigkeitsüberwachungseinrichtung, welche zumindest die Halterung, einen Drehzahlsensor und das Ritzel der Geschwindigkeitsüberwachungseinrichtung umfasst, kann an einem Strukturteil eines Tragwerkes der Personentransportanlage ortsfest befestigt werden. In diesem Tragwerk ist auch die Hauptantriebswelle der Personentransportanlage drehbar gelagert.

Aus der vorangehenden Beschreibung ist klar entnehmbar, dass eine Montage der Geschwindigkeitsüberwachungseinrichtung nicht nur während des Zusammenbaus der Personentransportanlage im Herstellerwerk möglich ist. Aufgrund des ringförmigen, zweigeteilten Adapters können auch bestehende, in Bauwerken eingebaute Personentransportanlage mit einer Geschwindigkeitsüberwachungseinrichtung der vorgenannten Art, nachgerüstet werden. Zudem erleichtert diese Ausgestaltung die Wartung der Geschwindigkeitsüberwachungseinrichtung.

Die Personentransportanlage kann eine Steuerungseinrichtung und/oder eine Signalübertragungseinrichtung zu einer externen Datenverarbeitungseinrichtung aufweisen. Die durch den Drehzahlsensor erzeugten Signale können an die Steuerungseinrichtung und/oder die Signalübertragungseinrichtung kontinuierlich oder in diskreten Zeitabschnitten übermittelt werden. Diese Signale können mit Grenzwerten bezüglich zulässiger Beschleunigungs- und Verzögerungswerte, maximal zulässiger Geschwindigkeiten des Transportbandes und dergleichen mehr verglichen werden und bei einer Überschreitung eines dieser Grenzwerte kann ein Alarmsignal ausgegeben werden, welches eine adäquate Aktion der Steuerungseinrichtung wie beispielsweise einen Not-Stopp des Transportbandes triggert.

Ferner kann parallel zur physisch existierenden Personentransportanlage ein diese Personentransportanlage virtuell abbildender digitaler Doppelgänger-Datensatz vorhanden sein. Hierbei können die durch den Drehzahlsensor erzeugten Signale über die Signalübertragungseinrichtung auf den digitalen Doppelgänger-Datensatz übertragen werden. Durch die Verarbeitung dieser Signale in Verbindung mit den Daten des digitalen Doppelgänger-Datensatzes können dynamische Vorgänge der in Betrieb stehenden Personentransportanlage in Echtzeit auf dem digitalen Doppelgänger-Datensatz simuliert und dargestellt werden.

Der digitale Doppelgänger-Datensatz umfasst die charakterisierenden Eigenschaften von Bauteilen der physischen Personentransportanlage in maschinen-verarbeitbarer Weise. Dieser ist aus Bauteilmodell-Datensätzen aufgebaut die Daten umfassen, welche durch Messen charakterisierender Eigenschaften an der physischen Personentransportanlage nach deren Zusammenbau und Installation in einem Bauwerk ermittelt wurden.

Die charakterisierenden Eigenschaften der physischen Bauteile können geometrische Abmessungen des Bauteils, das Gewicht des Bauteils und/oder die Oberflächenbeschaffenheit des Bauteils sein. Geometrische Abmessungen der Bauteile können beispielsweise eine Länge, eine Breite, eine Höhe, ein Querschnitt, Radien, Verrundungen, etc. der Bauteile sein. Die Oberflächenbeschaffenheit der Bauteile kann beispielsweise Rauigkeiten, Texturen, Beschichtungen, Farben, Reflektivitäten, etc. der Bauteile umfassen. Die charakterisierenden Eigenschaften können aber auch dynamische Informationen sein, beispielsweise ein Bewegungsvektor eines Bauteilmodell-Datensatzes, der dessen Bewegungsrichtung und Geschwindigkeit relativ zu umgebenden Bauteilmodell-Datensätzen oder zu einem statischen Referenzpunkt des digitalen Doppelgänger-Datensatzes angibt.

Die charakterisierenden Eigenschaften können sich auf einzelne Bauteile oder Bauteilgruppen beziehen. Beispielsweise können sich die charakterisierenden Eigenschaften auf einzelne Bauteile beziehen, aus denen größere, komplexere Bauteilgruppen zusammengesetzt werden. Alternativ oder ergänzend können sich die Eigenschaften auch auf aus mehreren Bauteilen zusammengesetzte komplexere Gerätschaften wie zum Beispiel Antriebsmaschinen, Getriebeeinheiten, Förderketten, etc. beziehen.

Die Signale des Drehzahlsensors werden als Messdaten auf den digitalen Doppelgänger-Datensatz übertragen und unter Verwendung eines Regelsatzes werden charakterisierende Eigenschaften der von den übertragenen Messdaten betroffenen Bauteilmodell-Datensätze neu ermittelt. Anschließend werden die charakterisierenden Eigenschaften der betroffenen Bauteilmodell-Datensätze mit den neu ermittelten, charakterisierenden Eigenschaften aktualisiert. Konkret kann beispielsweise die vom Drehzahlsensor gemessene Drehzahl auf den, die Hauptantriebswelle darstellenden Bauteilmodell-Datensatz sowie auf die, das Transportband bildenden Bauteilmodell-Datensätze übertragen werden. Dadurch können beispielsweise bei dem auf einem Bildschirm als virtuelle Darstellung wiedergegebenen digitaler Doppelgänger-Datensatz, alle dynamisch bewegbaren Bauteilmodell-Datensätze mit der gleichen Geschwindigkeit dargestellt werden, wie sie deren physischen Bauteile in der physische Personentransportanlage zum Zeitpunkt der Erfassung der Signale aufweisen. Aus den Bewegungen der Bauteilmodell-Datensätze lassen sich die Interaktionen der Bauteilmodell-Datensätze simulieren und mittels den entsprechenden, bekannten Berechnungsprogrammen aus den Gebieten der Physik, der Mechanik und der Festigkeitslehre, auf die Bauteile einwirkenden Kräfte ermitteln.

Danach können durch die Überwachung Veränderungen und Veränderungstrends der aktualisierten charakterisierenden Eigenschaften des umlaufend angeordneten Transportbandes und deren Einfluss auf die Bauteile des Transportbandes und auf die mit diesen Bauteilen in Interaktion stehenden Bauteile mittels des digitalen Doppelgänger-Datensatzes durch Berechnungen und/oder durch statische und dynamische Simulationen verfolgt und beurteilt werden. Selbstverständlich sind auch am digitalen Doppelgänger-Datensatz Bewertungen bezüglich grenzwertüberschreitender dynamischer Vorgänge möglich, wie sie weiter oben in Zusammenhang mit der Steuerungseinrichtung dargelegt wurden.

Die vorliegende Erfindung umfasst auch ein Verfahren zur Montage einer Geschwindigkeitsüberwachungseinrichtung gemäß Anspruch 11.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale im Schutzumfang der beigefügten Ansprüche in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Figur 1 zeigt schematisch eine Übersichtsansicht der wichtigsten Komponenten beziehungsweise Bauteile einer Fahrtreppe.
Figur 2 zeigt in dreidimensionaler Ansicht einen Abschnitt der Hauptantriebswelle aus der Figur 1, sowie eine erste, mögliche Ausgestaltung und Anordnung der Geschwindigkeitsüberwachungseinrichtung.
Figur 3 zeigt in dreidimensionaler Ansicht die Hauptantriebswelle aus der Figur 1, sowie eine zweite, mögliche Ausgestaltung und Anordnung der Geschwindigkeitsüberwachungseinrichtung.
Figur 4 zeigt in dreidimensionaler Ansicht einen Abschnitt der Hauptantriebswelle aus der Figur 1, sowie eine dritte, mögliche Ausgestaltung und Anordnung der Geschwindigkeitsüberwachungseinrichtung.
Figur 5 zeigt in geschnittener Ansicht Details der in der Figur 4 dargestellten Geschwindigkeitsüberwachungseinrichtung.

Die Figuren sind lediglich schematisch und nicht maßstabsgetreu. Gleiche Bezugszeichen bezeichnen in den verschiedenen Figuren gleiche oder gleichwirkende Merkmale.

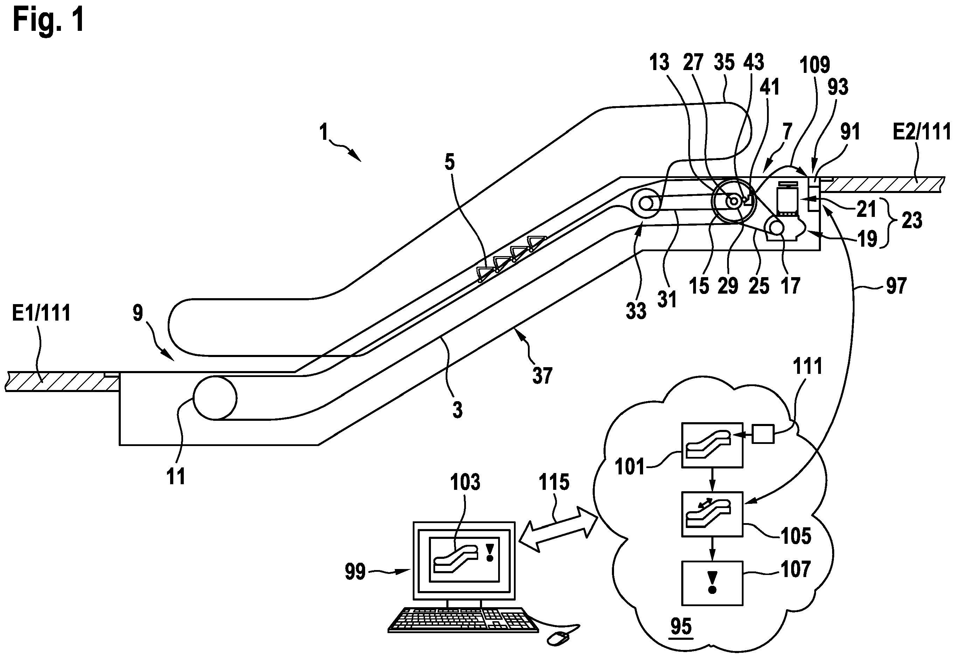

Die Figur 1 zeigt eine Personentransportanlage 1, die als Fahrtreppe ausgestaltet ist. Hierbei sind lediglich die wichtigsten Komponenten der Personentransportanlage 1 schematisch dargestellt.

Die Personentransportanlage 1 verbindet eine erste Etage E1 eines Bauwerkes 111 mit einer zweiten Etage E2 dieses Bauwerkes 111. Hierzu weist die Personentransportanlage 1 ein Tragwerk 37 auf, welches an den beiden Etagen E1, E2 im Bauwerk 111 abgestützt ist. Das Tragwerk 37 ist hierbei stabil und tragfähig ausgestaltet, so dass es die Gewichtskräfte der übrigen Komponenten der Personentransportanlage 1 sowie der zu transportierenden Benutzer und deren Gegenstände gegen das Bauwerk 111 abstützen kann.

Im Tragwerk 37 ist ein Transportband 3 zwischen einem ersten Umlenkbereich 9 und einem zweiten Umlenkbereich 7 umlaufend angeordnet. Das Transportband 3 weist Stufen 5 auf, auf denen die Benutzer stehen können. Zur Umlenkung ist in der ersten Etage E1 ein Umlenkrad 11 im Umlenkbereich 9 angeordnet. In der zweiten Etage E2 ist im Umlenkbereich 7 ein Antriebsrad 13 angeordnet, welches nicht nur der Umlenkung des Transportbandes 3, sondern auch zu dessen Antrieb dient. Hierzu ist das Antriebsrad 13 auf einer Hauptantriebswelle 27 drehübertragend befestigt. Des Weiteren ist auf der Hauptantriebswelle 27 ein Antriebskettenrad 15 angeordnet. Über eine Antriebskette 25 ist das Antriebskettenrad 15 mit einem Antriebsritzel 17 wirkverbunden. Das Antriebsritzel 17 wird durch einen Motor 21 angetrieben, in dem dessen Drehbewegungen über ein Getriebe 19 reduziert, auf das Ritzel 17 übertragen werden. Der Motor 21 und das Getriebe 19 bilden zusammen eine Antriebseinheit 23.

Die Personentransportanlage 1 weist zudem einen Handlauf 35 auf, welcher ebenfalls umlaufend angeordnet ist. Um diesen anzutreiben, weist die Personentransportanlage 1 einen Handlaufantrieb 33 auf. Der Handlaufantrieb 33 wird über eine Handlaufantriebskette 31 mit einem Handlaufantriebskettenrad 29 wirkverbunden, welches Handlaufantriebskettenrad 29 ebenfalls drehübertragend auf der Hauptantriebswelle 27 angeordnet ist. Durch diese Ausgestaltung ist die Bewegung des Handlaufs 35 mit der Bewegung des Transportbandes 3, beziehungsweise mit dessen Stufen 5, synchronisiert.

Um die Geschwindigkeit des Transportbandes 3 beziehungsweise des Handlaufs 35 zu erfassen, ist eine Geschwindigkeitsüberwachungseinrichtung 41 vorgesehen, welche die Drehzahl beziehungsweise die Drehgeschwindigkeit der Hauptantriebswelle 27 erfassen kann. Wie durch den Pfeil 109 symbolisch dargestellt, können die von der Geschwindigkeitsüberwachungseinrichtung 41 generierten Signale, welche die Drehgeschwindigkeit beziehungsweise die Drehzahl der Hauptantriebswelle 27 wiedergeben, auf eine Signalübertragungseinrichtung 91 und/oder auf eine Steuerungseinrichtung 93 der Personentransportanlage 1 übertragen werden. In der Steuerungseinrichtung 93 können die Signale der Geschwindigkeitsüberwachungseinrichtung 41 in geeigneter Weise ausgewertet werden. Hierbei können beispielsweise diese Signale mit den Motorsteuerungsdaten und Motorsignalen des Motors 21 verglichen werden, so dass bei Abweichungen, welche eine gewisse Toleranz überschreiten, das Transportband 3 der Personentransportanlage 1 festgesetzt wird.

In der Figur 1 ist eine weitere Möglichkeit dargestellt, die Signale der Geschwindigkeitsüberwachungseinrichtung 41 beziehungsweise von deren Drehzahlsensor 43 auszuwerten. Hierzu wird ein digitaler Doppelgänger-Datensatz 101 verwendet, welcher beispielsweise in einer Datenverarbeitungseinrichtung 95 (Cloud) gespeichert ist. Dieser digitale Doppelgänger-Datensatz 101 bildet die Personentransportanlage 1 virtuell ab. Das heisst, jedes einzelne Bauteil der Personentransportanlage 1 ist auch im digitalen Doppelgänger-Datensatz 101 wiedergegeben. Vorzugsweise ist der digitale Doppelgänger-Datensatz 101 in Bauteilmodell-Datensätze 113 strukturiert, die über Schnittstelleninformationen miteinander verknüpft sind. Mit anderen Worten werden die Bauteile der Personentransportanlage 1 als Bauteilmodell-Datensätze 113 wiedergegeben. Jeder dieser Bauteilmodell-Datensätze weist möglichst vollständig alle charakterisierenden Eigenschaften des abzubildenden, physischen Bauteils auf. Ferner sind die im digitalen Doppelgänger-Datensatz 101 vorhandenen Schnittstelleninformationen dazu da, die Anordnung der Bauteile zueinander, deren Wechselwirkung miteinander bei der Einwirkung und Übertragung von Kräften, Momenten und dergleichen mehr, sowie gegebenenfalls deren Bewegungs-Freiheitsgrade zueinander, wiedergeben.

Dieser digitale Doppelgänger-Datensatz 101 kann beispielsweise über eine Eingabe/Ausgabe-Schnittstelle 99, im dargestellten Beispiel ein Personal Computer, aus der Datenverarbeitungseinrichtung 95 heruntergeladen, weiterverarbeitet und zu Simulationen 105 herangezogen werden. Selbstverständlich können die Simulationen 105 auch in der Datenverarbeitungseinrichtung 95 durchgeführt werden, wobei die Eingabe/Ausgabe-Schnittstelle 99 dann nur die Funktion eines Computerterminals aufweisen kann.

Um die Simulationen 105 durchführen zu können, besteht beispielsweise wie durch den Doppelpfeil 97 dargestellt die Möglichkeit, über die Signalübertragungseinrichtung 91 die Signale des Drehzahlsensors 43 der Geschwindigkeitsüberwachungseinrichtung 41, auf den digitalen Doppelgänger-Datensatz 101 zu übertragen. Derart ergänzt, können mit diesem dann die Simulationen 105 durchgeführt werden, indem untersucht wird, wie sich die Signale der Geschwindigkeitsüberwachungseinrichtung 41 auf die einzelnen durch Bauteilmodell-Datensätze 113 dargestellten, virtuellen Bauteile des digitalen Doppelgänger-Datensatzes 101 auswirken.

Bei der gesamten Durchführung der Simulation 105 ist die Eingabe/Ausgabe-Schnittstelle 99 mit der Datenverarbeitungseinrichtung 95, wie durch den Doppelpfeil 115 dargestellt, in Kommunikation. Dementsprechend können die Simulation 105 und die Simulationsergebnisse 107 als virtuelle Darstellung 103 auf der Eingabe/Ausgabe-Schnittstelle 99 dargestellt werden. Hierdurch lassen sich Vorgänge, die sich bei der in Betrieb stehenden Personentransportanlage 1 ereignen, in Echtzeit auf der Eingabe/Ausgabe-Schnittstelle 99 in ausgewerteter Form darstellen.

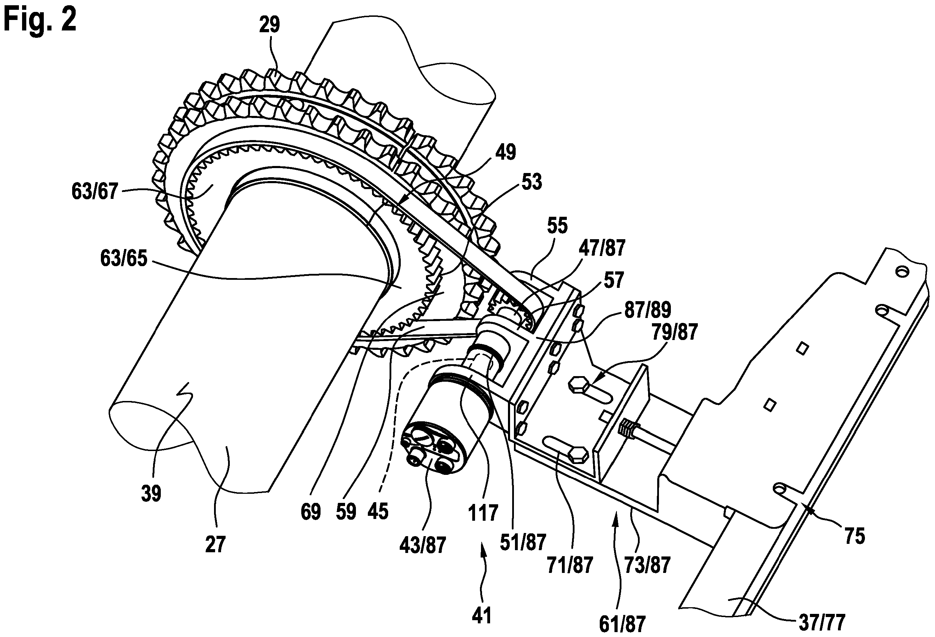

In der Figur 2 ist eine erste, mögliche Ausführung der Geschwindigkeitsüberwachungseinrichtung 41 dargestellt. Der besseren Übersicht wegen zeigt die Figur 2 lediglich ein Strukturteil 77 sowie einen Teil der Hauptantriebswelle 27 der Personentransportanlage 1. Das Strukturteil 77 des vorliegenden Ausführungsbeispiels ist Teil des in der Figur 1 gezeigten Tragwerks 37.

Die Hauptantriebswelle 27 weist eine Wellenmantelfläche 39 auf. An dieser Wellenmantelfläche 39 ist das Handlaufantriebskettenrad 29 befestigt, welches auch in der Figur 1 dargestellt ist. Unmittelbar an das Handlaufantriebskettenrad 29 angrenzend, ist eine Abgriffseinrichtung 49 auf der Hauptantriebswelle 27, beziehungsweise an deren Wellenmantelfläche 39 angeordnet. Die Abgriffseinrichtung 49 kann einen ringförmigen geteilten Adapter 63 umfassen, welcher eine erste Ringhälfte 65 und eine zweite Ringhälfte 67 aufweist. Durch diese Ausführung kann die Abgriffseinrichtung 49 auch dann auf der Wellenmantelfläche 39 befestigt werden, wenn die Hauptantriebswelle 27 in der Personentransportanlage 1 verbaut ist. Vorzugsweise werden die erste Ringhälfte 65 und die zweite Ringhälfte 67 an einer Seitenflanke 69 des Handlaufantriebskettenrades 29 befestigt. Dies kann beispielsweise mittels Schrauben erfolgen. Es ist aber auch möglich, dass die erste Ringhälfte 65 und die zweite Ringhälfte 67 miteinander verschraubt werden, indem Schrauben vorgesehen sind, die die beiden Ringhälften 65, 67 miteinander verbinden, so dass die inneren Ringflächen des ringförmigen geteilten Adapters 63 auf der Wellenmantelfläche 39 festgeklemmt werden. Die Abgriffseinrichtung 49 weist zudem eine Verzahnung 53 auf, welche an den äusseren Ringflächen der ersten Ringhälfte 65 und der zweiten Ringhälfte 67 ausgebildet ist.

Die Geschwindigkeitsüberwachungseinrichtung 41 umfasst ferner einen Drehzahlsensor 43, ein Ritzel 47, eine Kupplung 51 und eine Halterung 61, die zusammen eine Baugruppe 87 bilden. Um eine gewisse Einstellbarkeit und Justierbarkeit des Ritzels 47 relativ zur Abgriffseinrichtung 49 zu gewährleisten, ist die Halterung 61 zweiteilig ausgeführt und weist somit einen ersten Halterungsteil 71 und einen zweiten Halterungsteil 73 auf. Der zweite Halterungsteil 73 kann über einen Befestigungsbereich 75 mit dem Strukturteil 77 verbunden werden. Der erste Halterungsteil 71 ist durch eine Verbindungsstelle 79 relativ zum zweiten Halterungsteil 73 einstellbar mit diesem verbunden.

Der erste Halterungsteil 71 weist zudem einen Lagerbock 89 mit zwei Lagerstellen 55, 57 auf, in welchen das Ritzel 47 drehbar gelagert ist. Am Lagerbock 89 ist zudem ein Aufnahmeflansch 117 ausgebildet, über den der Drehsensor 43 mit dem ersten Halterungsteil 71 verbunden werden kann. Um die Eingangswelle 45 des Drehzahlsensors 43 vor Biegebelastungen zu schützen, wird die Eingangswelle 45 über eine verdrehsteife, flexible Kupplung 51 drehübertragend mit dem Ritzel 47 verbunden. Das Ritzel 47 wird drehübertragend mittels eines formschlüssigen Übertragungselementes 59 mit der Verzahnung 53 der Abgriffseinrichtung 49 verbunden. Das formschlüssige Übertragungselement 59 kann im vorliegenden Ausführungsbeispiel eine Kette oder ein Zahnriemen sein. Der besseren Übersicht wegen ist das Übertragungselement 59 in der Figur 2 nur schematisch, ohne Zahnprofil oder Kettenglieder dargestellt. Selbstverständlich wäre an Stelle einer Kette oder eines Zahnriemens auch ein Zwischenzahnrad einsetzbar.

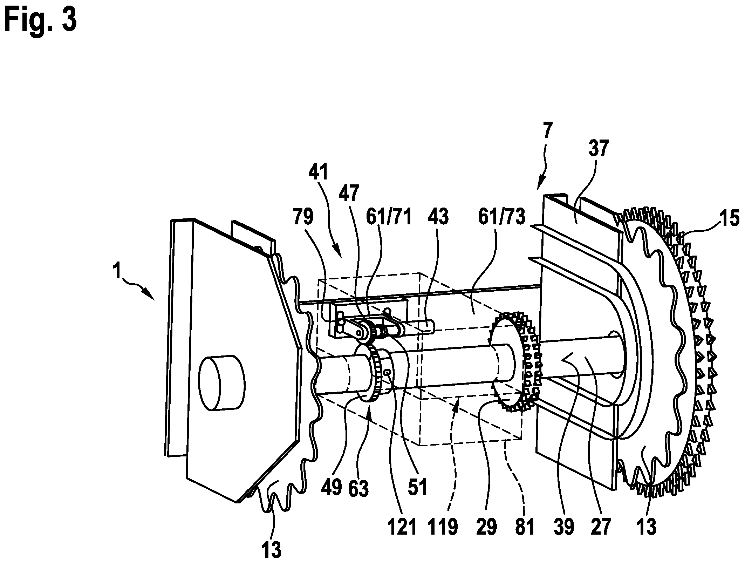

In der Figur 3 ist ein Teil der Komponenten dargestellt, welche im Umlenkbereich 7 der Personentransportanlage 1 angeordnet sind. Insbesondere ist ein Teil des Tragwerkes 37 sowie die Hauptantriebswelle 27 dargestellt, an der das Antriebskettenrad 15, zwei Antriebsräder 13 und das Handlaufantriebskettenrad 29 befestigt sind. Die Figur 3 zeigt zudem eine weitere Ausgestaltung der Geschwindigkeitsüberwachungseinrichtung 41.

Die in der Figur 3 dargestellte Geschwindigkeitsüberwachungseinrichtung 41 weist dieselben wie im vorangehenden Ausführungsbeispiel der Figur 2 gezeigten Komponenten auf. Dies ist insbesondere der Drehzahlsensor 43, die verdrehsteife flexible Kupplung 51 sowie das Ritzel 47, welche in der bereits beschriebenen Weise im ersten Halterungsteil 71 der Halterung 61 angeordnet sind. Das erste Halterungsteil 71 ist über die einstellbare Verbindungsstelle 79 mit dem zweiten Halterungsteil 73 der Halterung 61 verbunden. Das zweite Halterungsteil 73 ist wiederum am Tragwerk 37 ortsfest befestigt.

Wie beim Ausführungsbeispiel der Figur 2 weist auch die in der Figur 3 dargestellte Geschwindigkeitsüberwachungseinrichtung 41 eine Abgriffseinrichtung 49 auf, die einen ringförmig geteilten Adapter 63 aufweist. Anstelle eines angeformten Wellenabsatzes ist dieser auf der Wellenmantelfläche 39 der Hauptantriebswelle 27 mittels Schrauben 121 festgeschraubt. Anders als in der Figur 2, erfolgt die drehübertragende Kopplung durch einen direkten Eingriff des Ritzels 47 in der Verzahnung der Abgriffseinrichtung 63. Hierdurch kann ein weiteres Element wie beispielsweise eine Kette oder ein Zahnriemen vermieden werden. Um die Geschwindigkeitsüberwachungseinrichtung 41 vor Umwelteinflüssen und insbesondere Schmutz zu schützen, kann ein Schutzgehäuse 81 vorgesehen sein. Das mit unterbrochener Linie dargestellte Schutzgehäuse 81 umschliesst die gesamte Geschwindigkeitsüberwachungseinrichtung 41 sowie einen Teil der dieses Schutzgehäuse 81 durchdringenden Hauptantriebswelle 27. Damit das Schutzgehäuse 81 montiert werden kann, ist dieses zweiteilig ausgeführt und kann an der angedeuteten Trennstelle 119 getrennt werden. Vorzugsweise wird das Schutzgehäuse 81 ebenfalls am ersten Halterungsteil 71 oder zweiten Halterungsteil 73 befestigt. Selbstverständlich muss das Schutzgehäuse 81 nicht umschliessend ausgestaltet sein. Das Schutzgehäuse 81 kann auch nur Teile der Geschwindigkeitsüberwachungseinrichtung 41 überspannen. Ein solches Schutzgehäuse 81 würde beispielsweise nur den oberen Teil des dargestellten Schutzgehäuses 81 umfassen.

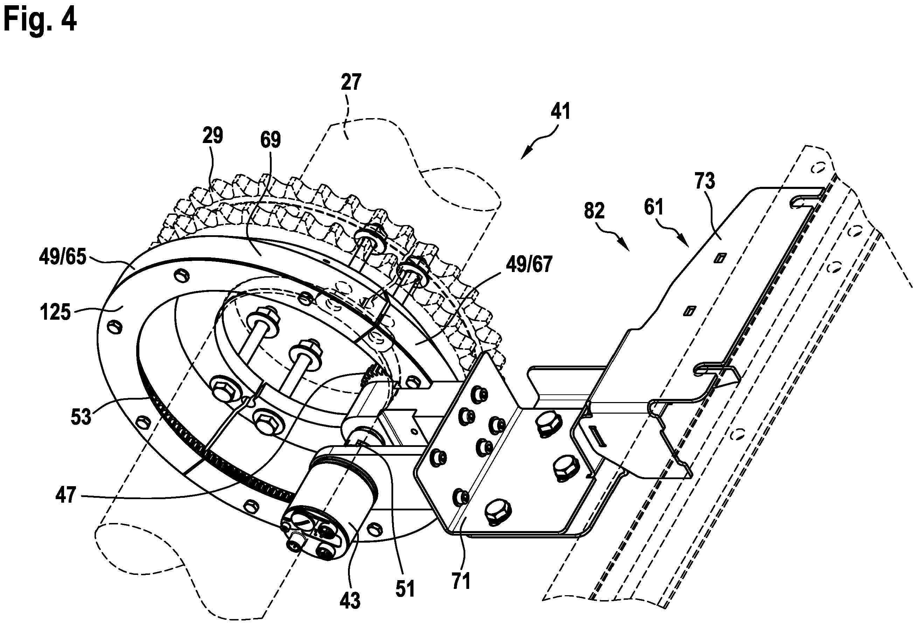

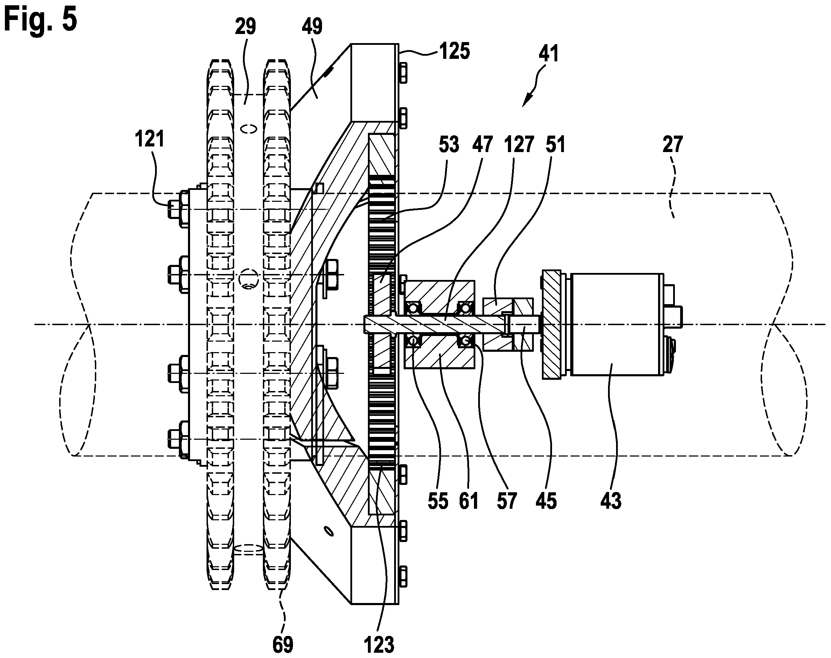

Die Figuren 4 und 5 zeigen beide eine weitere Ausgestaltung der Erfindung und werden daher nachfolgend gemeinsam beschrieben. Wie bereits in Zusammenhang mit der Figur 3 beschrieben, kann das Ritzel 47 in direktem Eingriff mit der Verzahnung 53 der Abgriffseinrichtung 49 sein. Um die Abgriffseinrichtung 49 der Geschwindigkeitsüberwachungseinrichtung 41 deutlicher hervorzuheben, wurde die Hauptantriebswelle 27 sowie das mit dieser fest verbundene Handlaufantriebskettenrad 29 in unterbrochener Linie dargestellt.

Die Abgriffseinrichtung 49 ist ebenfalls zweiteilig und weist eine erste Ringhälfte 65 und eine zweite Ringhälfte 67 auf. An einer durch die beiden Ringhälften 65, 67 gebildeten, ringförmigen Innenfläche 123 ist Verzahnung 53 ausgebildet, in welche das Ritzel 47 eingreifen und die Drehbewegung der Abgriffseinrichtung 49 abgreifen kann. Die beiden Ringhälften 65, 67 werden mittels Befestigungsschrauben 121 an einer Seitenflanke 69 des Handlaufkettenrades 29 befestigt. Durch die innenliegend ausgebildete Verzahnung 53 ist der empfindlichste Teil bezüglich Verschmutzungen bereits gut geschützt. Um den Schutz zu verbessern, kann zusätzlich noch ein ringförmiger Schmutzabweiser 125 vorgesehen sein.

Die Geschwindigkeitsüberwachungseinrichtung 41 weist auch beim Ausführungsbeispiel der Figuren 4 und 5 eine Baugruppe 87 auf, die eine Halterung 61 mit einem ersten Halterungsteil 71 und einem zweiten Halterungsteil 72, einen Drehzahlsensor 43, das Ritzel 47 und eine drehsteife Kupplung 51 umfasst. Wie aus der Figur 5 klar ersichtlich ist, sind die beiden Lagerstellen 55, 57 zwischen dem Ritzel 47 und der drehsteifen Kupplung 51 angeordnet. Hierdurch werden ebenfalls die Biegemomente an der Ritzelwelle 127 des Ritzels 47 über die Halterung 61 abgestützt und dadurch der Drehzahlsensor 43 von diesen entlastet.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem aus Redundanzgründen ein zusätzlicher Drehzahlsensor 43 in erfindungsgemässer Anordnung mit der Abgriffseinrichtung 49 drehübertragend in Eingriff gebracht, angeordnet wird.

## Patentansprüche

1. Geschwindigkeitsüberwachungseinrichtung (41) zum Messen einer Drehzahl beziehungsweise Drehgeschwindigkeit einer Hauptantriebswelle (27) einer Personentransportanlage (1), aufweisend:
- mindestens ein Drehzahlsensor (43) mit einer Eingangswelle (45);
- eine Abgriffseinrichtung (49) die so konfiguriert ist, dass sie auf einer Wellenmantelfläche (39) der Hauptantriebswelle (27) einer Personentransportanlage (1), deren Drehzahl gemessen werden soll, angeordnet werden kann; sowie
- eine Halterung (61) zur Befestigung des Drehzahlsensors (43) in einer ortsfesten Position relativ zu einer Drehachse der Abgriffseinrichtung (49),
wobei die Geschwindigkeitsüberwachungseinrichtung (41) zudem ein Ritzel (47) aufweist, welches mit der Eingangswelle (45) mechanisch verbunden ist, so dass eine Drehung des Ritzels (47) auf die Eingangswelle (45) übertragen wird;
die Abgriffseinrichtung (49) eine Verzahnung (53) aufweist, die mit dem Ritzel (47) drehübertragend koppelbar ist;
wobei das Ritzel (47) in der Halterung (61) in zwei Lagerstellen (55, 57) drehbar gelagert ist und wobei die Abgriffseinrichtung (49) dazu ausgestaltet ist, an einer Seitenflanke (69) eines Wellenabsatzes der Hauptantriebswelle (27) befestigt zu werden,
**dadurch gekennzeichnet, dass** die Abgriffseinrichtung (49) einen ringförmigen, geteilten Adapter (63) umfasst und wobei die Verzahnung (53) auf einer Innenfläche (123) der Abgriffseinrichtung (49) angeordnet ist.

2. Geschwindigkeitsüberwachungseinrichtung (41) nach Anspruch 1, wobei die drehübertragende Kopplung durch einen direkten Eingriff des Ritzels (47) in der Verzahnung (53) der Abgriffseinrichtung (49) erfolgt.

3. Geschwindigkeitsüberwachungseinrichtung (41) nach Anspruch 1, wobei die drehübertragende Kopplung zwischen dem Ritzel (47) und der Verzahnung (53) über ein formschlüssiges Übertragungselement (59) erfolgt.

4. Geschwindigkeitsüberwachungseinrichtung (41) nach einem der Ansprüche 1 bis 3, wobei zwischen dem Ritzel (47) und der Eingangswelle (45) eine verdrehsteife, flexible Kupplung (51) vorgesehen ist.

5. Geschwindigkeitsüberwachungseinrichtung (41) nach einem der Ansprüche 1 bis 4, wobei die Halterung (61) zumindest zweiteilig ausgeführt ist, wobei am ersten Halterungsteil (71) der Halterung (61) der Drehzahlsensor (43) angeordnet und das Ritzel (47) drehbar in den Lagerstellen (55, 57) gelagert ist, wobei das zweite Halterungsteil (73) der Halterung (61) einen Befestigungsbereich (75) aufweist, der zur Befestigung der Halterung (61) an einen feststehenden Strukturteil (77) der Personentransportanlage (1) vorgesehen ist, und wobei das erste Halterungsteil (71) und das zweite Halterungsteil (73) über eine Verbindungsstelle (79) einstellbar miteinander verbunden sind.

6. Geschwindigkeitsüberwachungseinrichtung (41) nach einem der Ansprüche 1 bis 4, wobei diese ein Schutzgehäuse (81) umfasst, welches an der Halterung (61) befestigbar ist und das Schutzgehäuse (81) das Ritzel (47), den Drehzahlsensor (43) und die Abgriffseinrichtung (49) überspannt.

7. Geschwindigkeitsüberwachungseinrichtung (41) nach einem der Ansprüche 1 bis 4, wobei diese ein Schutzgehäuse (81) umfasst, welches an der Halterung (61) befestigbar ist und das Ritzel (47), den Drehzahlsensor (43) und Abgriffseinrichtung (49) umschliesst.

8. Personentransportanlage (1), die als Fahrtreppe oder Fahrsteig ausgestaltet ist, **dadurch gekennzeichnet, dass** diese eine Geschwindigkeitsüberwachungseinrichtung (41) nach einem der Ansprüche 1 bis 7, aufweist, wobei deren Abgriffseinrichtung (49) an einer Wellenmantelfläche (39) einer Hauptantriebswelle (27) der Personentransportanlage (1) befestigt ist und eine Baugruppe (87), die zumindest die Halterung (61), einen Drehzahlsensor (43) und das Ritzel (47) der Geschwindigkeitsüberwachungseinrichtung (41) umfasst, an einem Strukturteil (77) eines Tragwerkes (37) der Personentransportanlage (1) ortsfest befestigt ist, in welchem Tragwerk (37) auch die Hauptantriebswelle (27) drehbar gelagert ist.

9. Personentransportanlage (1) nach Anspruch 8, wobei diese eine Steuerungseinrichtung (93) und/oder eine Signalübertragungseinrichtung (91) zu externen Datenverarbeitungseinrichtungen (95) aufweist und wobei durch den Drehzahlsensor (43) erzeugte Signale an die Steuerungseinrichtung (93) und /oder die Signalübertragungseinrichtung (95) kontinuierlich oder in diskreten Zeitabschnitten übermittelt werden.

10. Personentransportanlage (1) nach Anspruch 9, wobei parallel zur Personentransportanlage (1) ein diese Personentransportanlage (1) virtuell abbildender Digitaler-Doppelgänger-Datensatz (101) vorhanden ist, wobei die durch den Drehzahlsensor (43) erzeugten Signale über die Signalübertragungseinrichtung (93) auf den Digitaler-Doppelgänger-Datensatz (101) übertragbar sind, und wobei durch die Verarbeitung dieser Signale in Verbindung mit den Daten des Digitaler-Doppelgänger-Datensatzes (101), dynamische Vorgänge der in Betrieb stehenden Personentransportanlage (1) in Echtzeit mittels dem Digitaler-Doppelgänger-Datensatz (101) simuliert und dargestellt werden können.

11. Verfahren zur Montage einer Geschwindigkeitsüberwachungseinrichtung (41) nach einem der Ansprüche 1 bis 7 in einer Personentransportanlage (1), die als Fahrtreppe oder Fahrsteig ausgestaltet ist, **dadurch gekennzeichnet, dass** die Abgriffseinrichtung (49), welche eine auf einer Innenfläche (123) angeordnete Verzahnung (53) aufweist, an einer Seitenflanke (69) eines Wellenabsatzes einer Hauptantriebswelle (27) der Personentransportanlage (1) befestigt wird, und dass eine Baugruppe (87) an einem Strukturteil (77) eines Tragwerkes (37) der Personentransportanlage (1), in welchem Tragwerk (37) auch die Hauptantriebswelle (27) drehbar gelagert ist, benachbart zur Hauptantriebswelle (27) ortsfest befestigt wird, wobei diese Baugruppe (87) zumindest die Halterung (61), einen Drehzahlsensor (43) und das Ritzel (47) der Geschwindigkeitsüberwachungseinrichtung (41) umfasst.

## Claims

1. Speed monitoring device (41) for measuring a rotational frequency or rotational speed of a main drive shaft (27) of a passenger transportation system (1), comprising:
- at least one rotational speed sensor (43) having an input shaft (45);
- a tapping device (49) which is configured in such a way that it can be arranged on a shaft casing surface (39) of the main drive shaft (27) of a passenger transportation system (1) of which the rotational frequency is to be measured; and
- a bracket (61) for attaching the rotational speed sensor (43) in a fixed position relative to an axis of rotation of the tapping device (49),
the speed monitoring device (41) further comprising a pinion (47) which is mechanically connected to the input shaft (45) so that a rotation of the pinion (47) is transmitted to the input shaft (45);
the tapping device (49) having a gearing (53) which can be coupled to the pinion (47) in a rotation-transmitting manner;
the pinion (47) being rotatably mounted in the bracket (61) at two bearing points (55, 57) and the tapping device (49) being designed to be attached to a side flank (69) of a shaft shoulder of the main drive shaft (27),
**characterized in that** the tapping device (49) comprises an annular, split adapter (63) and the gearing (53) being arranged on an inner surface (123) of the tapping device (49).

2. Speed monitoring device (41) according to claim 1, wherein the rotation-transmitting coupling is effected by direct engagement of the pinion (47) in the gearing (53) of the tapping device (49).

3. Speed monitoring device (41) according to claim 1, wherein the rotation-transmitting coupling between the pinion (47) and the gearing (53) is effected via a positive-locking transmission element (59).

4. Speed monitoring device (41) according to any of claims 1 to 3, wherein a torsionally rigid, flexible clutch (51) is provided between the pinion (47) and the input shaft (45).

5. Speed monitoring device (41) according to any of claims 1 to 4, wherein the bracket (61) is designed in at least two parts, wherein the rotational speed sensor (43) is arranged on the first bracket part (71) of the bracket (61) and the pinion (47) is rotatably mounted at the bearing points (55, 57), wherein the second bracket part (73) of the bracket (61) has an attachment region (75), which is provided for attaching the bracket (61) to a fixed structural part (77) of the passenger transportation system (1), and wherein the first bracket part (71) and the second bracket part (73) are adjustably interconnected via a connection point (79).

6. Speed monitoring device (41) according to any of claims 1 to 4, wherein said device comprises a protective housing (81) which can be attached to the bracket (61) and the protective housing (81) covers the pinion (47), the rotational speed sensor (43) and the tapping device (49).

7. Speed monitoring device (41) according to any of claims 1 to 4, wherein it comprises a protective housing (81) which can be attached to the bracket (61) and encloses the pinion (47), the rotational speed sensor (43) and tapping device (49).

8. Passenger transportation system (1) which is configured as an escalator or moving walkway, **characterized in that** it has a speed monitoring device (41) according to any of claims 1 to 7, the tapping device (49) of which being attached to a shaft casing surface (39) of a main drive shaft (27) of the passenger transportation system (1) and an assembly (87), which comprises at least the bracket (61), a rotational speed sensor (43) and the pinion (47) of the speed monitoring device (41), being fixedly attached to a structural part (77) of a supporting structure (37) of the passenger transportation system (1), in which supporting structure (37) the main drive shaft (27) is also rotatably mounted.

9. Passenger transportation system (1) according to claim 8, wherein it has a control device (93) and/or a signal transmission device (91) to external data processing devices (95) and wherein signals generated by the rotational speed sensor (43) are transmitted continuously or at discrete time intervals to the control device (93) and/or the signal transmission device (95).

10. Passenger transportation system (1) according to claim 9, wherein parallel to the passenger transportation system (1) there is a digital twin data record (101) that virtually depicts this passenger transportation system (1), wherein the signals generated by the rotational speed sensor (43) can be transmitted via the signal transmission device (93) to the digital twin data record (101), and wherein, by processing these signals in connection with the data of the digital twin data record (101), dynamic processes of the passenger transportation system (1) in operation can be simulated and displayed in real time by means of the digital twin data record (101).

11. Method for installing a speed monitoring device (41) according to any of claims 1 to 7 in a passenger transportation system (1), which is configured as an escalator or moving walkway, **characterized in that** the tapping device (49), which has a gearing (53) arranged on an inner surface (123), is attached to a side flank (69) of a shaft shoulder of a main drive shaft (27) of the passenger transportation system (1),
**and in that** an assembly (87) on a structural part (77) of a supporting structure (37) of the passenger transportation system (1), in which supporting structure (37) the main drive shaft (27) is also rotatably mounted, is fixedly attached adjacent to the main drive shaft (27), this assembly (87) comprising at least the bracket (61), a rotational speed sensor (43) and the pinion (47) of the speed monitoring device (41).

## Revendications

1. Dispositif de surveillance (41) de vitesse destiné à mesurer un régime ou, selon le cas, une vitesse de rotation d'un arbre d'entraînement principal (27) d'un système (1) de transport de passagers, présentant :
- au moins un capteur (43) de régime comportant un arbre d'entrée (45) ;
- un dispositif de détection (49) conçu pour pouvoir être agencé sur une surface d'enveloppe (39) d'arbre de l'arbre d'entraînement principal (27) d'un système (1) de transport de passagers dont le régime doit être mesuré ; et
- un support (61) destiné à fixer le capteur (43) de régime dans une position fixe par rapport à un axe de rotation du dispositif de détection (49),
le dispositif de surveillance (41) de vitesse comprenant en outre un pignon (47) qui est relié mécaniquement à l'arbre d'entrée (45), de telle sorte qu'une rotation du pignon (47) est transmise à l'arbre d'entrée (45) ;
le dispositif de détection (49) présentant une denture (53) qui peut être accouplée au pignon (47) de manière à transmettre la rotation ;
le pignon (47) étant monté rotatif dans le support (61) en deux sites d'appui (55, 57) et le dispositif de détection (49) étant réalisé pour être fixé sur un flanc latéral (69) d'un épaulement d'arbre de l'arbre d'entraînement principal (27),
**caractérisé en ce que** le dispositif de détection (49) comprend un adaptateur (63) annulaire divisé et la denture (53) étant agencée sur une surface interne (123) du dispositif de détection (49).

2. Dispositif de surveillance (41) de vitesse selon la revendication 1, l'accouplement de transmission de rotation ayant lieu par un engrènement direct du pignon (47) dans la denture (53) du dispositif de détection (49).

3. Dispositif de surveillance (41) de vitesse selon la revendication 1, l'accouplement de transmission de rotation entre le pignon (47) et la denture (53) ayant lieu par l'intermédiaire d'un élément de transmission (59) à complémentarité de forme.

4. Dispositif de surveillance (41) de vitesse selon l'une des revendications 1 à 3, un accouplement (51) flexible, rigide en torsion étant prévu entre le pignon (47) et l'arbre d'entrée (45).

5. Dispositif de surveillance (41) de vitesse selon l'une des revendications 1 à 4, le support (61) étant exécuté au moins en deux parties, le capteur (43) de régime étant agencé sur la première partie de support (71) du support (61) et le pignon (47) étant monté de manière rotative dans les sites d'appui (55, 57), la deuxième partie de support (73) du support (61) présentant une zone de fixation (75) qui est prévue pour la fixation du support (61) sur une partie structurale (77) fixe du système (1) de transport de passagers et la première partie de support (71) et la deuxième partie de support (73) étant reliées entre elles de manière réglable par l'intermédiaire d'un site de liaison (79).

6. Dispositif de surveillance (41) de vitesse selon l'une des revendications 1 à 4, celui-ci comprenant un boîtier de protection (81) qui peut être fixé au support (61), le boîtier de protection (81) enjambant le pignon (47), le capteur (43) de régime et le dispositif de détection (49).

7. Dispositif de surveillance (41) de vitesse selon l'une des revendications 1 à 4, celui-ci comprenant un boîtier de protection (81) qui peut être fixé au support (61) et qui renferme le pignon (47), le capteur (43) de régime et le dispositif de détection (49).

8. Système (1) de transport de passagers, qui est réalisé comme un escalier roulant ou un trottoir roulant, **caractérisé en ce qu'**il présente un dispositif de surveillance (41) de vitesse selon l'une des revendications 1 à 7, son dispositif de détection (49) étant fixé à une surface d'enveloppe (39) d'arbre d'un arbre d'entraînement principal (27) du système (1) de transport de passagers et un module (87), qui comprend au moins le support (61), un capteur (43) de régime et le pignon (47) du dispositif de surveillance (41) de vitesse, étant fixé de manière fixe à une partie structurale (77) d'une structure porteuse (37) du système (1) de transport de passagers, l'arbre d'entraînement principal (27) étant également monté de manière rotative dans la structure porteuse (37).

9. Système (1) de transport de passagers selon la revendication 8, celui-ci présentant un dispositif de commande (93) et/ou un dispositif de transmission de signaux (91) vers des dispositifs de traitement de données (95) externes et des signaux générés par le capteur (43) de régime étant transmis en continu ou par intervalles de temps discrets au dispositif de commande (93) et/ou au dispositif de transmission de signaux (95).

10. Système (1) de transport de passagers selon la revendication 9, un jeu de données (101) de double numérique reproduisant virtuellement ce système (1) de transport de passagers étant présent parallèlement au système (1) de transport de passagers, les signaux générés par le capteur (43) de régime pouvant être transmis au jeu de données (101) de double numérique par l'intermédiaire du dispositif de transmission de signaux (93) et, grâce au traitement de ces signaux en association avec les données du jeu de données (101) de double numérique, des processus dynamiques du système (1) de transport de passagers en fonctionnement pouvant être simulés et représentés en temps réel au moyen du jeu de données (101) de double numérique.

11. Procédé de montage d'un dispositif de surveillance (41) de vitesse selon l'une des revendications 1 à 7 dans un système (1) de transport de passagers qui est réalisé comme un escalier roulant ou un trottoir roulant, **caractérisé en ce que** le dispositif de détection (49), qui présente une denture (53) agencée sur une surface interne (123), est fixé sur un flanc latéral (69) d'un épaulement d'arbre d'un arbre d'entraînement principal (27) du système (1) de transport de passagers, et **en ce qu'**un module (87) est fixé de manière fixe, à proximité de l'arbre d'entraînement principal (27), à une partie structurale (77) d'une structure porteuse (37) du système (1) de transport de passagers, l'arbre d'entraînement principal (27) étant également monté rotatif dans la structure porteuse (37), ce module (87) comprenant au moins le support (61), un capteur (43) de régime et le pignon (47) du dispositif de surveillance (41) de vitesse.
